# EUROPEAN PATENT SPECIFICATION

(11) **EP 4 575 318 B1**
(45) Date of publication and mention of the grant of the patent: **23.09.2026**
(21) Application number: 24222607.4
(22) Date of filing: 20.12.2024
(51) Int. Cl.: F23R 3/14, F23R 3/28, F23R 3/36

(54) **FUEL INJECTOR ASSEMBLY FOR TURBINE ENGINES**
KRAFTSTOFFEINSPRITZANORDNUNG FÜR TURBINENMOTOREN
ENSEMBLE INJECTEUR DE CARBURANT POUR MOTEURS À TURBINE

(30) Priority: 20.12.2023 US 202318390479
(43) Date of publication of application: 25.06.2025
(73) Proprietor: RTX Corporation, Farmington, CT 06032 (US)
(72) Inventor: SNYDER, Timothy S., Farmington, 06032 (US)
(74) Representative: Dehns

(56) References cited:
- EP-A1- 3 832 208
- EP-A2- 3 434 883
- US-A- 3 764 071
- US-A- 4 854 127
- US-A1- 2019 203 929
- US-A1- 2022 268 213

## Description

### BACKGROUND

The subject matter disclosed herein generally relates to components for combustors in turbine engines and, more particularly, to improved cooling and operation of injectors for combustors of turbine engines such as for use with hydrogen fuel.

Aircraft turbine engines, such as those that power modern commercial and military aircraft, include a compressor section to pressurize a supply of air, a combustor section to burn a fuel in the presence of the pressurized air, and a turbine section to extract energy from the resultant combustion gases to generate thrust. The combustor section generally includes a plurality of circumferentially distributed fuel injectors that project toward a combustion chamber to supply fuel to be mixed and burned with the pressurized air.

Aircraft turbine engines typically include a plurality of centralized staging valves in combination with one or more fuel supply manifolds that deliver fuel to the fuel injectors. Other types of turbine engines may be industrial turbine engines for power generation, which may have similar configurations, although the specific components may vary, such as no inclusion of a fan or the like that may typically be included in aircraft engine applications.

Each fuel injector typically has an inlet fitting connected to the manifold at the base, a conduit connected to the base fitting, and a nozzle connected to the conduit to spray the fuel into the combustion chamber. Appropriate valves or flow dividers are provided to direct and control the flow of fuel through the nozzle. Some current fuel injectors are configured for and optimized for dual fuel (e.g., No. 2 Fuel Oil and Methane) with water injection to reduce NOx. As the aircraft industry transitions away from using hydrocarbon-based fuels, there is a desire to mix hydrogen with Methane at very high levels, up to and including 100% hydrogen. Because of the high flame speeds and reaction rates of hydrogen, flashback can occur at high pressure and temperature allowing the flame to attach on the gas fuel swirl vanes causing damage. As such, improved systems may be necessary to implement hydrogen use in turbine engine combustion systems. EP 3 832 208 A1 provides a prior art multi-fuel bluff-body piloted high-shear injector and method of using the same. US 2019/203929 A1 provides a prior art fuel nozzle for a gas turbine engine combustor. US 4,854,127 A1 provides a prior art bimodal swirler injector for a gas turbine combustor. EP 3 434 883 A2 provides a prior art low emissions combustor assembly for a gas turbine engine.

### SUMMARY

According to an aspect of the present invention, fuel injector nozzle assemblies for turbine engines are provided according to claim 1.

In an embodiment according to any of the previous embodiments, the fuel injector nozzle assemblies may include that each secondary jet nozzle is fluidly coupled to the inner third fluid passage.

In an embodiment according to any of the previous embodiments, the fuel injector nozzle assemblies may include that each secondary jet nozzle extends through the second fluid passage such that the second fluid and the first fluid are fluidly separate.

In an embodiment according to any of the previous embodiments, the fuel injector nozzle assemblies may include that the first fluid passage is configured to receive a liquid fuel.

In an embodiment according to any of the previous embodiments, the fuel injector nozzle assemblies may include that the liquid fuel comprises a mixture with water as a component of the liquid fuel.

In an embodiment according to any of the previous embodiments, the fuel injector nozzle assemblies may include that the gaseous fuel comprises hydrogen.

In an embodiment according to any of the previous embodiments, the fuel injector nozzle assemblies may include that the plurality of third fluid passages are configured to receive air from a compressor.

In an embodiment according to any of the previous embodiments, the fuel injector nozzle assemblies may include that the inner third fluid passage is configured to dispense a mixture of the third fluid and the first fluid and the outer third fluid passage is configured to dispense only the third fluid.

According to another aspect of the present invention, turbine engines are provided according to claim 9.

In an embodiment according to any of the previous embodiments, the turbine engines may include that each secondary jet nozzle is fluidly coupled to the inner third fluid passage.

In an embodiment according to any of the previous embodiments, the turbine engines may include that each secondary jet nozzle extends through the second fluid passage such that the second fluid and the first fluid are fluidly separate.

In an embodiment according to any of the previous embodiments, the turbine engines may include that the plurality of third fluid passages are configured to receive air from the compressor section and wherein the inner third fluid passage is configured to dispense a mixture of the third fluid and the first fluid and the outer third fluid passage is configured to dispense only the third fluid.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic cross-sectional illustration of an aircraft turbine engine that may incorporate embodiments disclosed herein;
FIG. 2 is a schematic illustration of an industrial turbine engine that may incorporate embodiments of the present disclosure;
FIG. 3 is a schematic illustration of a combustion section of a turbine engine that may incorporate embodiments of the present disclosure;
FIG. 4A is a side elevation view of a nozzle assembly that may incorporate embodiments of the present disclosure;
FIG. 4B is a cross-sectional view of the nozzle assembly of FIG. 4A;
FIG. 5 is a schematic illustration of a nozzle assembly that may incorporate embodiments of the present disclosure;
FIG. 6 is a schematic illustration showing fluid flow through a nozzle assembly; and
FIG. 7A is a schematic illustration of a nozzle assembly;
FIG. 7B illustrates flow paths of fluids through the nozzle assembly of FIG. 7A;
FIG. 7C illustrates flow velocities of fluids through the nozzle assembly of FIG. 7A; and
FIG. 8 is a schematic illustration of a nozzle assembly in accordance with an embodiment of the present disclosure.

### DETAILED DESCRIPTION

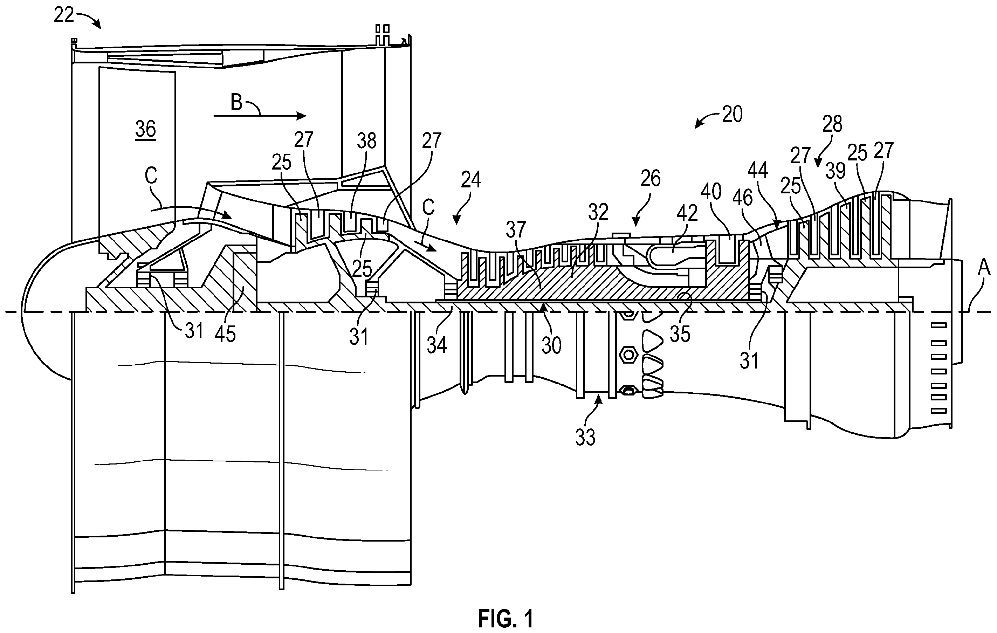

FIG. 1 schematically illustrates a gas turbine engine 20. The illustrative, example gas turbine engine 20 is a two-spool turbofan engine that generally incorporates a fan section 22, a compressor section 24, a combustor section 26, and a turbine section 28. The fan section 22 drives air along a bypass flow path B, while the compressor section 24 drives air along a core flow path C for compression and communication into the combustor section 26. The core flow path C directs compressed air into the combustor section 26 for combustion with a fuel. Hot combustion gases generated in the combustor section 26 are expanded through the turbine section 28. Although depicted as a turbofan gas turbine engine, it should be understood that the concepts described herein are not limited to turbofan engines and these teachings could extend to other types of engines.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded across the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, a bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only examples of one embodiment of a geared architecture engine and that the present disclosure is applicable to other gas turbine engines, including direct drive turbofans.

In an embodiment of the gas turbine engine 20, a significant amount of thrust may be provided by the bypass flow path B due to the high bypass ratio. The fan section 22 of the gas turbine engine 20 is designed for a particular flight condition-typically cruise at about 0.8 Mach and about 35,000 feet (10,668 meter). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tᵣₐₘ ° R)/(518.7° R)]^{0.5}, where Tᵣₐₘ represents the ambient temperature in degrees Rankine. The Low Corrected Fan Tip Speed according to one non-limiting embodiment of the example gas turbine engine 20 is less than about 1150 feet per second (fps) (351 meters per second (m/s)).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

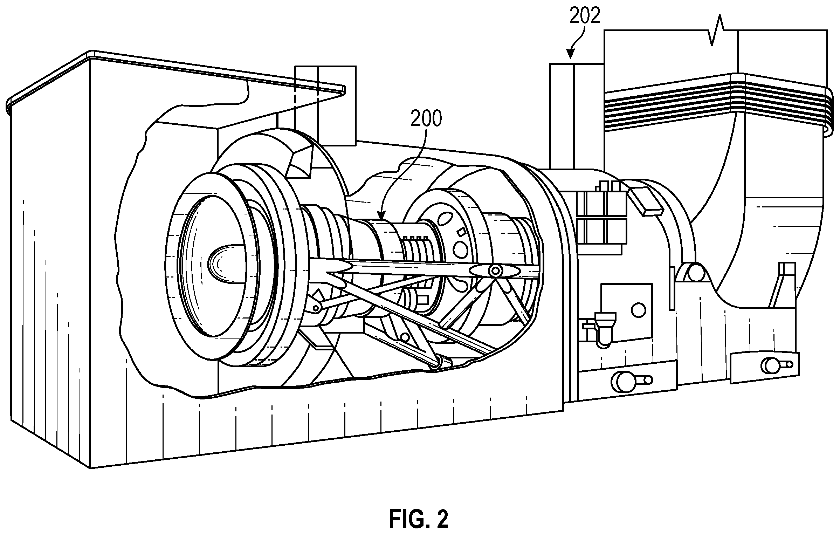

FIG. 2 illustrates an industrial turbine engine architecture 200 that is located within an enclosure 202. The industrial turbine engine architecture 200 may be similar to that shown and described above with respect to FIG. 1. The industrial turbine engine architecture 200 may be configured with embodiments and features described herein.

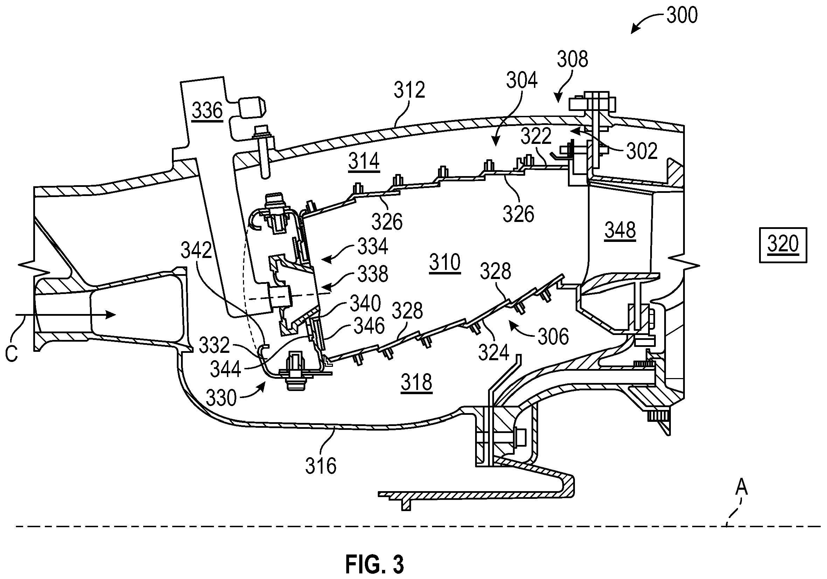

Turning now to FIG. 3, a combustor section 300 for use in a turbine engine is schematically shown (e.g., aircraft or industrial turbine engine). The combustor section includes a combustor 302 with an outer combustor wall assembly 304, an inner combustor wall assembly 306, and a diffuser case 308. The outer combustor wall assembly 304 and the inner combustor wall assembly 306 are spaced apart such that a combustion chamber 310 is defined therebetween. The combustion chamber 310 may be generally annular in shape.

The outer combustor wall assembly 304 is spaced radially inward from an outer diffuser case 312 of the diffuser case 308 to define an outer annular plenum 314. The inner combustor wall assembly 306 is spaced radially outward from an inner diffuser case 316 of the diffuser case 308 to define an inner annular plenum 318. It should be understood that although a particular combustor arrangement is illustrated, other combustor types, such as can combustors, with various combustor liner/wall arrangements will also benefit from embodiments of the present disclosure.

The combustor wall assemblies 304, 306 contain the combustion products for direction toward a turbine section 320 of a turbine engine. Each combustor wall assembly 304, 306 generally includes a respective support shell 322, 324 which supports one or more liner panels 326, 328, respectively mounted to a hot side of the respective support shell 322, 324. Each of the liner panels 326, 328 may be generally rectilinear and manufactured of, for example, a nickel based super alloy, ceramic or other temperature resistant material and are arranged to form a liner array. In one disclosed non-limiting embodiment, the liner array may include a multiple of forward liner panels and a multiple of aft liner panels that are circumferentially staggered to line the hot side of the outer support shell 322. A multiple of forward liner panels and a multiple of aft liner panels may be circumferentially staggered to line the hot side of the inner shell 324.

The combustor 302 further includes a forward assembly 330 immediately downstream of a compressor section of the engine to receive compressed airflow therefrom. The forward assembly 330 generally includes an annular hood 332 and a bulkhead assembly 334 which locate a multiple of fuel nozzles 336 (one shown) and a multiple of swirlers 338 (one shown). Each of the swirlers 338 is mounted within an opening 340 of the bulkhead assembly 334 to be circumferentially aligned with one of a multiple of annular hood ports 342. Each bulkhead assembly 334 generally includes a bulkhead support shell 344 secured to the combustor wall assembly 304, 306, and a multiple of circumferentially distributed bulkhead liner panels 346 secured to the bulkhead support shell 344.

The annular hood 332 extends radially between, and is secured to, the forwardmost ends of the combustor wall assemblies 304, 306. The annular hood 332 forms the multiple of circumferentially distributed hood ports 342 that accommodate the respective fuel nozzle 336 and introduce air into the forward end of the combustion chamber 310. Each fuel nozzle 336 may be secured to the diffuser case module 308 and project through one of the hood ports 342 and the respective swirler 338.

In operation, the forward assembly 330 introduces core combustion air into the forward section of the combustion chamber 310 while the remainder enters the outer annular plenum 314 and the inner annular plenum 318. The multiple of fuel nozzles 336 and adjacent structure generate a blended fuel-air mixture that supports stable combustion in the combustion chamber 310.

Opposite the forward assembly 330, the outer and inner support shells 322, 324 are mounted to a first row of Nozzle Guide Vanes (NGVs) 348. The NGVs 348 are static engine components which direct the combustion gases onto turbine blades in a turbine section of the engine to facilitate the conversion of pressure energy into kinetic energy. The combustion gases are also accelerated by the NGVs 348 because of a convergent shape thereof and are typically given a "spin" or a "swirl" in the direction of turbine rotation.

Although FIG. 3 is illustrative of a specific combustor section configuration, those of skill in the art will appreciate that other combustor configurations may benefit from embodiments of the present disclosure. For example, can combustors, annular combustors, can-annular combustors, and other types of combustors may implement or be configured with embodiments of the present disclosure.

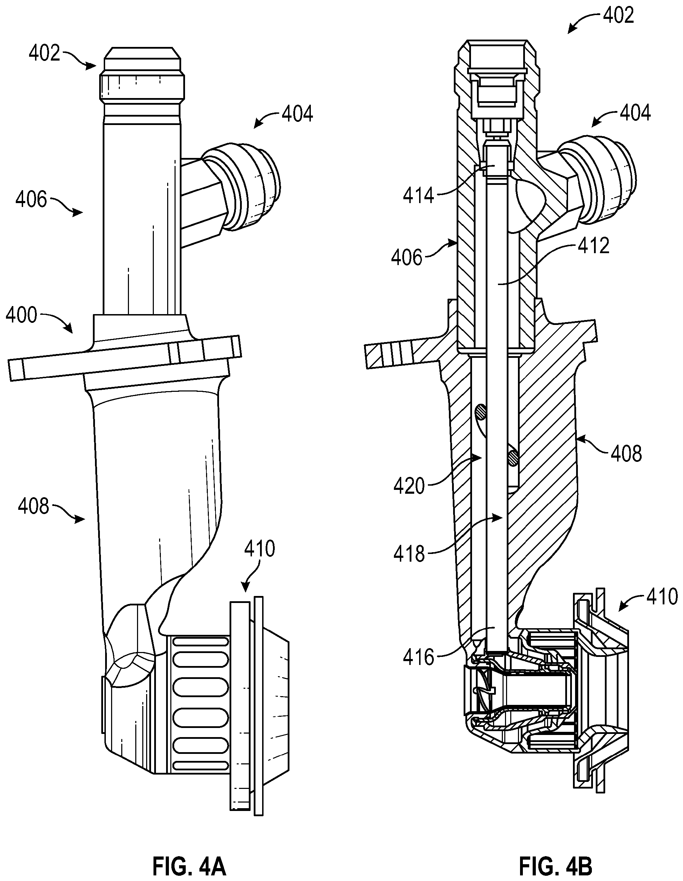

Referring now to FIGS. 4A-4B, schematic illustrations of a fuel injector 400 for use in combustors and combustor sections of turbine engines and may incorporate embodiments of the present disclosure. The fuel injector 400 may be implemented in the above described combustors and engine configurations, and variations thereon. FIG. 4A illustrates a side elevation view of the fuel injector 400 and FIG. 4B illustrates a cross-sectional view of the fuel injector 400.

As shown, the fuel injector 400 includes a first inlet 402 and a second inlet 404 defined by an inlet housing 406, a support housing 408, and a nozzle assembly 410. In some embodiments, and as shown, the first inlet 402 is arranged transverse to the second inlet 404. The inlet housing 406 is received within the support housing 408 and a tube 412 extends through the housings 406, 408 (e.g., as shown FIG. 4B).

The first inlet 402 may receive a first fluid such as a liquid and the second inlet 404 may receive a second fluid such as a gas. The fuel injector 400 provides for concentric passages for the first fluid and the second fluid. For example, in some embodiments, the first fluid may be a liquid state of Jet-A, diesel, JP8, water and combinations thereof, and the second fluid may be a gas, such as natural gas or methane. Each of the fluids are communicated through separate concentric passages within the fuel injector 400 such that gas turbine engine readily operates on either fuel or combinations thereof. For example, in the illustrative embodiment, the tube 412 provides a barrier between the first fluid (e.g., within the tube 412 and sourced from the first inlet 402) and the second fluid (e.g., in a space around the tube 412 and sourced from the second inlet 404). As noted, the first fluid may be in a liquid state and the second fluid may be in a gaseous state.

The tube 412 is secured within the inlet housing 406 at a first end 414 and secured in or to the nozzle assembly 410 at a second end 416. The connection at the first end 414 may include a seal, such as an O-ring, or the like. The connection at the second end 416 may be via a braze, weld, thread, or other attachment to the nozzle assembly 410. The tube 412 defines a first fluid passage 418 within the tube 412 and a second fluid passage 420 defined between an exterior surface of the tube 412 and an interior surface of the housings 406, 408. The second fluid passage 420 may be an annular passage that surrounds the tube 412 along a length of the fuel injector 400. The second fluid passage 420 defined within the housings 406, 408 and around the tube 412 provides for a buffer or heat shield to minimize or prevent coking of the fluid passing through the first fluid passage 418 within the tube 412. The first fluid and the second fluid may be mixed and joined together at the nozzle assembly 410.

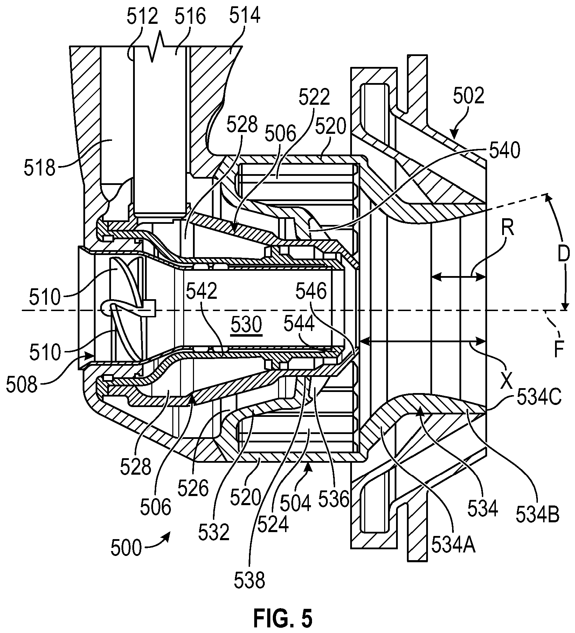

Referring now to FIG. 5, a schematic cross-sectional view of a nozzle assembly 500. The nozzle assembly 500 includes a swirler 502 with various components arranged within and relative to the swirler 502. The nozzle assembly 500 includes an outer air swirler 504, an inner air swirler 506, and an air inflow tube 508 with a helical inflow vane assembly 510 arranged along a nozzle axis F. The nozzle assembly 500 includes a structure similar to the fuel injector described above, with a tube 512 arranged within a housing 514 and defining a first fluid passage 516 and a second fluid passage 518.

An outer wall 520 of the outer air swirler 504 includes a multiple of axial slots 522 which receive airflow therethrough. An outer annular air passage 524 is defined around the axis F and within the outer air swirler 504. An annular fuel gas passage 526 is defined around the axis F and between the outer air swirler 504 and the inner air swirler 506. The annular fuel gas passage 526 receives fluid (e.g., gaseous fuel) from within the second fluid passage 518. An annular liquid passage 528 is defined around the axis F and within the inner air swirler 506. The annular liquid passage 528 receives fluid (e.g., liquid fuel) from the first fluid passage 516 of the tube 512. A central air passage 530 is defined along the axis F within the air inflow tube 508.

The outer annular air passage 524 is generally defined between the outer wall 520 and an inner wall 532 of the outer air swirler 504. An end section 534 of the outer wall 520 extends beyond an end section 536 of the inner wall 532 and the annular liquid passage 528. The end section 534 of the outer wall 520 includes a convergent section 534A that transitions to a divergent section 534B and terminates at a distal end 534C. That is, the end section 534 defines a convergent-divergent nozzle with an essentially asymmetric hourglass-shape downstream of the inner air swirler 506 and the air inflow tube 508.

In one illustrative and non-limiting embodiment, the divergent section 534B defines an angle D of between about zero to thirty (0-30) degrees with respect to the axis F. The end section 534 defines a length X which. The length X, in this non-limiting example, may be about 0-0.75 inches (0-19 mm) in length along the axis F with a filming region R of about 0-0.4 inches (0-10 mm). That is, the length of the filming region R defines from about 0-55% of the length X of the end section 534. The filming region R may extend to the distal end 534C of the divergent section 534B. It should be appreciated that various other geometries of the outer air swirler 504 may benefit from embodiments described herein.

The end section 536 of the inner wall 532 abuts an outer wall 538 of the inner air swirler 506 to defines a multiple of angled slots or vanes 540, which may be arranged and oriented as skewed slots to form an axial swirled exit for the annular gas passage 526. That is, the annular gas passage 526 terminates with the multiple of angled slots 540 to direct the fuel gas axially and imparts a swirl thereto. In other embodiments, the annular gas passage 526 may terminates with a multiple of openings that are generally circular passages. It should be appreciated that other geometries may alternatively be provided without departing from the scope of the present disclosure. The annular gas passage 526 communicates essentially all, e.g., about one hundred (100) percent of the fuel gas through the multiple of angled slots 540. The multiple of angled slots 540 will decrease the injection area and increase axial swirl momentum to increase circumferential uniformity and total air swirl due to the angle of gas injection and increase in air stream mixing downstream of the nozzle assembly 500 to facilitate fuel-air mixing. Each of the multiple of angled slots 540 may be arranged as skewed quadrilaterals in shape. In some such embodiments, the multiple of angled slots 540 may be skewed at an angle between about fifty to sixty degrees (50°-60°) around the axis F. The outer wall 538 and an inner wall 542 of the inner air swirler 506 define the annular liquid passage 528. An end section 544 of the outer wall 538 and an end section 546 of the inner wall 542 may be turned radially inward toward the axis F to direct the liquid at least partially radially inward.

The air inflow tube 508 is mounted within the inner wall 542 and includes the upstream helical inflow vane assembly 510 to swirl an airflow passing therethrough. Due in part to the swirled airflow through the air inflow tube 508, the liquid spray expands from the annular liquid passage 528 and impacts upon the filming region R to re-film/re-atomize the fluids as they are injected into a combustion chamber. The increased liquid injection recession causes large drops to re-film/re-atomization on the larger wall surface of the divergent section 534B, resulting in smaller drop size and higher penetration which increases a water vaporization rate as well as positioning water in desirable locations for the combustion process. The reduced water drop size and the effective utilization of water facilitates a decrease in NOx emissions with reduced water injection (i.e. lower water-to-fuel ratio).

The above described fuel injector may be useful for dual-fuel operation (e.g., No. 2 Fuel Oil and Methane) with water injection to reduce NOx. For example, water may be provided through the first inlet and the tube and mixed with a gas fuel, or water may be mixed with a liquid fuel (e.g., Jet A, No. 2 Fuel Oil, etc.). The gas fuel may be methane or propane, and in some embodiments a mixture of methane and hydrogen may be provided through the second inlet and passed through the second fluid passage around the tube. It may be advantageous to increase the amount of hydrogen that is used in such systems, such as mixing the hydrogen with methane at very high levels up to and including 100% hydrogen (e.g., no methane at the maximum configuration). However, because of the high flame speeds and reaction rates of hydrogen, flashback can occur at high pressure and temperature allowing the flame to attach on the gas fuel swirl vanes causing damage (e.g., angled slots 540). That is, by increasing the amount of hydrogen within the gas fuel, flashback or other negative impacts may occur.

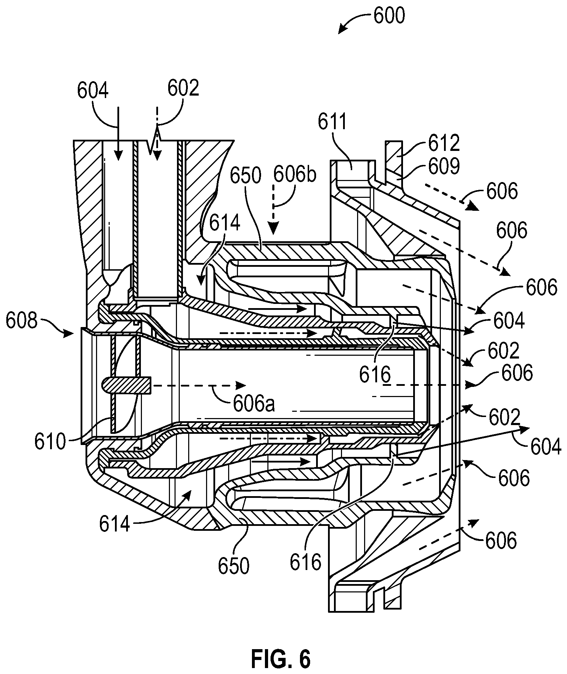

For example, referring now to FIG. 6 a schematic illustration of flow of fluids through a nozzle assembly 600 in accordance with an embodiment of the present disclosure is shown. The nozzle assembly 600 may be similar to that shown and described above, providing dual-fuel injection of fuel into a combustion chamber of a turbine engine. A first fluid 602 is provided through a first fluid passage and a second fluid 604 is provided through a second fluid passage, as described above. Air may be introduced to the system to swirl, mix, and provide oxygen for the combustion process. In FIG. 6, the air is indicated as a third fluid 606. The third fluid 606 (e.g., air) may be supplied into the nozzle assembly 600 through an air inflow tube 608. The air within the air inflow tube 608 may be swirled or rotated as it passes over or through a helical inflow vane assembly 610. As the fuel fluids 602, 604 (e.g., gas and liquid) are passed through the nozzle assembly 600, the flows will be joined together and mixed with the third fluid 606 (air). Some of the air 606 may be directed through a swirler 612 arranged at the outlet of the nozzle assembly 600.

As shown, the second fluid 604 may be passed through an annular gas passage 614. As the second fluid 604 reaches the outlet end of the nozzle assembly 600, it will be passed through a plurality of angled slots 616. The angled slots 616 may be defined by vanes or other angled walls that are configured to rotate and swirl the second fluid 604 as it is mixed with the other fluids 602, 606. When hydrogen is introduced into the second fluid 604 (e.g., mixture of hydrogen with other fuel, or hydrogen only), the hydrogen may be disrupted at the angled slots 616 and cause vane wakes that can negatively impact the nozzle assembly 600 and/or the combustion provided thereby.

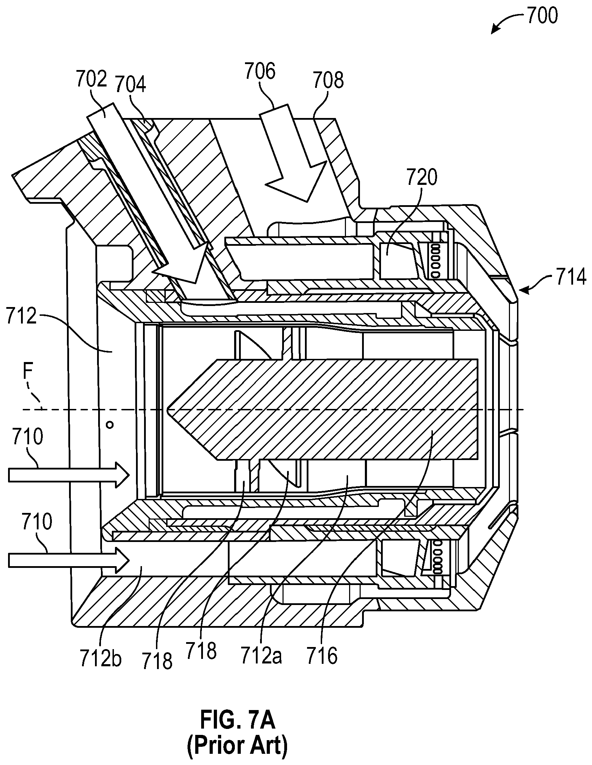

Referring now to FIGS. 7A-7C, schematic illustrations of a nozzle assembly 700 are shown. The nozzle assembly 700 may be similar to that shown and described above, and thus similar features may not be labeled or described in further detail. The nozzle assembly 700 is configured to receive a first fluid 702 through a first fluid passage 704, a second fluid 706 through a second fluid passage 708, and a third fluid 710 through a third fluid passage 712. In this configuration, the first and second fluid passages 704, 708 are structurally separate, as compared to the above described embodiments where the second fluid passage is arranged within the first fluid passage, however, the functionality thereof is substantially the same, as the first and second fluids will be mixed at an outlet 714 of the nozzle assembly 700.

In this configuration, the third fluid passage 712 is an air inflow tube having a center body 716 installed therein. The center body 716 includes one or more inner path vanes 718 arranged about an exterior of the center body 716. The center body 716 is positioned within the third fluid passage to swirl and direct part of the third fluid 710 toward the radially outward edges of the third flow passage 712. The center body 716 may be provided to stabilize a flame at the outlet 714 of the nozzle assembly 700. The inner path vanes 718 of the center body 716 will cause the flow to transition from an axial flow along an axis F of the nozzle assembly 700 to a circumferential or tangential flow and thus impart or induce a swirl within the third fluid. In this configuration, the third flow passage 712 is separated into two flows (e.g., 712a, 712b). As shown, an inner airflow passage 712a is defined between an exterior of the center body 716 and an inner wall of the third flow passage 712 and an outer airflow passage 712b is arranged or defined radially outward therefrom. As noted, a swirl may be introduced to the third fluid 710 by the inner path vanes 718 of the center body 716. The inner path vanes 718 are arranged within the inner airflow passage 712a and obstruct and impart a swirl to a portion of the third fluid 710 passing through the inner airflow passage 712a. In the outer airflow passage 712b, the third fluid 710 may be rotated or swirled as it passes through outer path vanes 720 proximate the outlet 714. This swirling at the outer path vanes 720 may serve to impart a swirl or rotation to the second fluid 706 as the flow enters the region of the outlet 714.

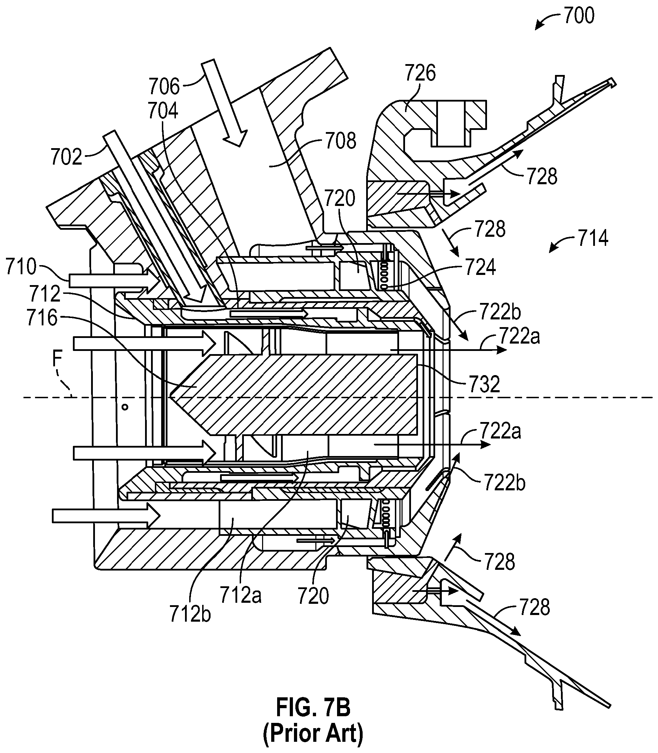

FIG. 7B illustrates the flow of fluids through the nozzle assembly 700. As shown, the first fluid 702 will be suppled through the first fluid passage 704. The first fluid passage 704 will extend along a tube or the like, and then the first fluid 702 will enter the nozzle assembly 700 and turn to an axial flow in a direction along the axis F. The first fluid passage 704 is defined, in part, by a wall of the third fluid passage 712, and in this embodiment is arranged radially inward (relative to the axis F) from the outer airflow passage 712b. The first fluid 702 will be injected into a combustion chamber at the outlet 714 between an outlet flow of the inner airflow passage 712a and an outlet flow of the outer airflow passage 712b. As each of the inner airflow passage 712a and the outer airflow passage 712b include swirling elements (inner path vanes 718 and outer path vanes 720), the first fluid 702 will be swirled and mixed with the third fluid 710. That is, an inner air flow 722a and an outer air flow 722b of the third fluid 710 will mix with the first fluid 702 at the outlet 714. In this configuration, the second fluid 706 will travel along the second fluid passage 708 and be radially injected into the outer airflow passage 712b downstream of the outer path vanes 720 through apertures 724, and thus be swirled. Further, because the second fluid 706 is mixed with the third fluid 710 in the outer flow passage 712b, the three fluids 702, 706, 710 will mix at the outlet 714 of the nozzle assembly 700. As shown in FIG. 7B, a swirler guide assembly 726 may be provided to direct cooling air 728 about the outlet 714 of the nozzle assembly 700.

As the three fluids are mixed and swirled at the outlet 714, the mixing and swirling fluids may be combusted. The center body 716 provides for a mechanism to increase a flow velocity of the third fluid 710 passing through the inner airflow passage 712a. It may be advantageous to have hydrogen mixed into or form the entirety of the second fluid 706. However, due to the properties of hydrogen, a recirculation of the mixture of fluids at the outlet 714 and/or wakes from vanes 720 and the like in various flow paths may cause excessive temperatures within the nozzle assembly 700.

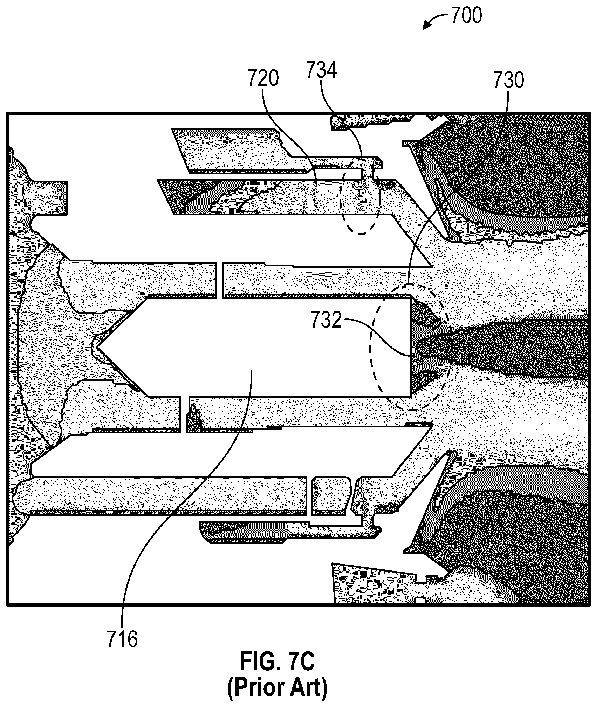

For example, as shown in FIG. 7C, a flow diagram illustrates a low velocity region 730 at an end wall 732 of the center body 716. A low velocity region 734 also exists at the location where the second fluid is injected into the third fluid downstream of the outer path vanes 720. These low velocity regions 730, 734 may allow for the hydrogen to attach, stagnate, and potentially combust at locations within the nozzle assembly 700, rather than in a combustion chamber.

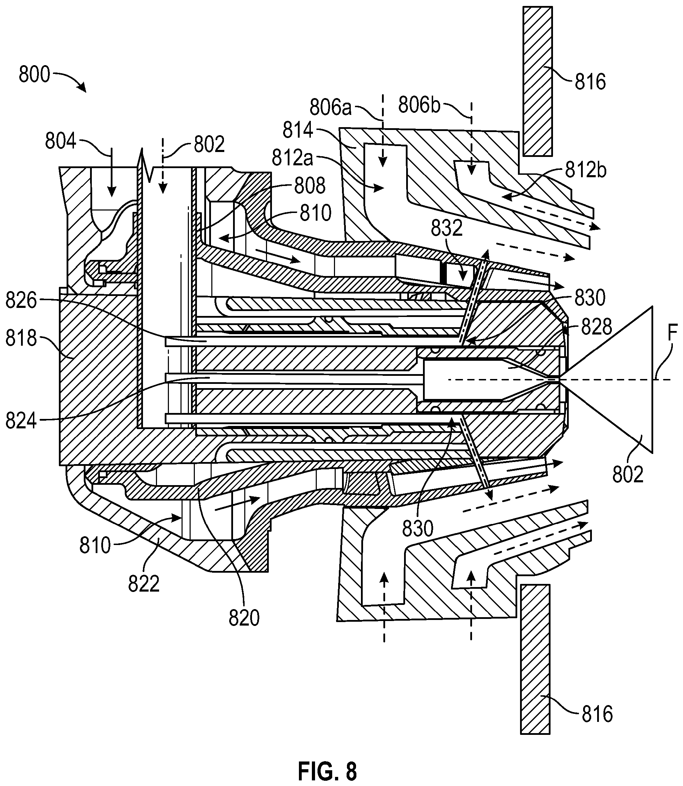

Turning now to FIG. 8, a schematic illustration of a nozzle assembly 800 in accordance with an embodiment of the present disclosure is shown. The nozzle assembly 800 is a multi-fluid combustor nozzle assembly for use in a turbine engine system. The nozzle assembly 800 is configured to mix three fluids, including a first fluid 802 (e.g., a liquid fuel), a second fluid 804 (e.g., a gaseous fuel), and a third fluid 806 (e.g., air, labeled 806a, 806b). The first fluid 802 is provided along a first fluid passage 808, the second fluid 804 is provided along a second fluid passage 810, and the third fluid 806 is provided along multiple third fluid passages 812 (labeled as 812a, 812b) defined within and a float swirler 814. The float swirler 814 may be arranged to float or move relative to a bulkhead 816 of a combustion chamber or the like. In this configuration, the nozzle assembly 800 includes a solid body center body 818 that is housed within or secured to an intermediate housing body 820. The intermediate housing body 820 is arranged within an outer housing body 822. The float swirler 814 is arranged radially outward from the outer housing body 822 relative to a nozzle axis F. In some embodiments, the intermediate housing body 820 and the center body 818 may be a single, monolithic or single-body configuration that is housed within the outer housing body 822. In still other embodiments, the intermediate housing body 820, the center body 818, and the outer housing body 822 may be formed as a single structure. In still other embodiments, the intermediate housing body 820, the center body 818, the outer housing body 822, and the float swirler 814 may be formed as a single structure. Various manufacturing techniques may be employed to form such configurations, including, without limitation, machining, casting, and/or additive manufacturing processes.

In this configuration, the center body 818 is a solid body structure, and thus no airflow is passed through the center body 818, in contrast to some of the other configurations shown and described above. Rather, the center body 818 is configured to support and define multiple flow paths for the first fluid 802 (e.g., liquid fuel). The center body 818 is configured to receive the first fluid passage 808, which is arranged, in this embodiment, normal to the nozzle axis F. In other configurations, the first fluid passage may be arranged to enter the center body at a different angle, depending on the specific configuration of the nozzle assembly. The first fluid passage 808 is fluidly coupled to multiple jet passages 824, 826 which are arranged to direct the first fluid 802 through the nozzle assembly 800 to be dispensed at an outlet end of the nozzle assembly 800.

For example, as shown in this illustrative embodiment, a primary jet passage 824 is arranged to fluidly couple the first fluid passage 808 to a primary jet nozzle 828. The primary jet nozzle 828 is arranged to dispense or direct the first fluid 802 in a conical spray or atomized spray along the nozzle axis F. The first fluid 802 dispensed from the primary jet nozzle 828 may be mixed with the second fluid 804 that is directed radially inward toward the nozzle axis F at the outlet or exit of the second fluid passage 810. Additionally, the third fluid 806 may be provided through the float swirler 814 and generate a swirl of fluids to ensure desired mixing of the fluids 802, 804, 806.

The center body 818 also includes one or more secondary jet passages 826 that supply a portion of the first fluid 802 to one or more secondary jet nozzles 830. As shown, the secondary jet nozzles 830 are configured to direct a portion of the first fluid 802 into an inner third fluid passage 812a of the float swirler 814. That is, within the inner third fluid passage 812a, the third fluid 806a and the first fluid 802 may be mixed and swirled through the structure of the float swirler 814. This mixture is dispensed into the combustion chamber at a location radially outward from the spray of the primary jet nozzle 828 and also radially outward from the outlet of the second fluid passage 810 (and the second fluid 804). Radially outward from the mixture of the first fluid 802 and the third fluid 806a within the inner third fluid passage 812a is a supply of unmixed third fluid 806b which is directed through an outer third fluid passage 812b of the float swirler 814.

In some configurations, and as shown, the secondary jet nozzles 830 may be defined as fluid passages from the center body 818 to the exterior of the outer housing body 822, and thus pass through the second fluid passage 810. The second fluid passage 810 may include one or more angled holes/apertures or vanes 832 that impart a turn or swirl into the second fluid 804 as it exits the second fluid passage 810 and mixes with the other fluids 802, 806 of the nozzle assembly 800. The secondary jet nozzles 830 may pass through an interior of the vanes 832 of the second fluid passage 810 to thereby fluidly isolate the two fluids 802, 804 as the portion of the first fluid 802 is directed into the inner third fluid passage 812a.

In operation, the nozzle assembly 800 provides for a three fluid mixture configuration. In a non-limiting example, the first fluid 802 may be a liquid fuel, such as jet fuel or the like, the second fluid 804 may be hydrogen, and the third fluid 806 may be air. The fuel may be supplied from fuel tank, and similarly the hydrogen, which may be in gaseous form, may be supplied from a hydrogen tank, which may be cryogenic for space saving purposes. The air maybe supplied from an upstream compressor (e.g., as shown in FIG. 3), with the air entering the float swirler 814 from a plenum surrounding a combustor or combustion chamber (e.g., as shown in FIG. 3). In some embodiments, the first fluid may be jet fuel, hydrocarbon fuel, or a mixture of such fuels with water, and may be supplied in a liquid or atomized state. The second fluid may be methane, propane, hydrogen, water, steam, or mixtures thereof, and may be supplied in gaseous state. The third fluid is air that is supplied radially inward through directed passages that are arranged radially outward from the rest of the nozzle assembly. The radially outward arranged passages may be defined with a float swirler that is attached to or part of the nozzle assembly, and may be arranged to float relative to a bulkhead of a combustor or the like. The float swirler may provide two distinct flows of air, which may be in the same direction or in a counter-swirl. Accordingly, as the fluids enter the combustion chamber for combustion, relative to a nozzle axis, the central flow is generally axial, but may include swirl induced by vanes (e.g., vanes 832) and/or a float swirler (e.g., float swirler 814).

In accordance with embodiments of the present disclosure, the first fluid (e.g., first fluid 802) may be directed radially outward through the airflow (e.g., secondary jet nozzles 830). Dispensed around the liquid fuel (first fluid 802) is the second fluid (second fluid 804), such as hydrogen or the like, which mixes with the fuel and air to form the combustible mixture. The outer flows, which are directed radially inward from the float swirler, contain and mix the fluids and can impart further rotation due to the swirled flow therethrough. The source of the third fluid (e.g., air) may be from the upstream compressor section of the engine and the outer annular plenum and the inner annular plenum that surround the combustion chamber.

Advantageously, embodiments described herein provide for improved fuel nozzle assemblies for use with gas turbine engines (e.g., industrial or aircraft applications). In accordance with some embodiments of the present disclosure, hydrogen fuel may be efficiently introduced into turbine engine systems through the use of the nozzle assemblies described herein. Various aspects, as described above, can help prevent attaching of the hydrogen to surfaces of the nozzle assembly through increasing flow rates and reducing stagnation, wakes, and the like that can cause hydrogen to attach to surfaces. For example, by incorporating a solid body center body into the nozzle assembly, an axial supply of the liquid fuel may be directed through a primary jet nozzle. Secondary jet nozzles may be provided to form a mixture of two fluids that are swirled within a float swirler to increase mixing of the fluids. Further, advantageously, inclusion of a float swirler at an exterior of the nozzle assembly provides for directed flow and swirler, thus improving mixture of the various fuel fluids.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A fuel injector nozzle assembly (800) for a turbine engine (20; 200) comprising:
a center body (818) defining at least one jet passage (824, 826) with a jet nozzle (828) arranged at an end of the center body (818), the center body (818) defining a nozzle axis (F);
wherein the at least one jet passage comprises a primary jet passage (824) fluidly coupled to the jet nozzle (828) and one or more secondary jet passages (826);
wherein each of the one or more secondary jet passages (826) is fluidly coupled to a respective secondary jet nozzle (830);
an intermediate housing body (820) arranged radially outward from the center body (818);
an outer housing body (822) arranged radially outward from the intermediate housing body (820); and
a float swirler (814) arranged radially outward from the outer housing body (822);
wherein:
the center body (818) is a solid body structure such that no airflow is passed through the center body;
a first fluid passage (808) is configured to supply a first fluid into the at least one jet passage (824, 826);
a second fluid passage (810) partially defined between the intermediate housing body (820) and the outer housing body (822) is configured to supply a second fluid;
wherein the second fluid passage (810) comprises at least one vane (832) extending between the intermediate housing body (820) and the outer housing body (822) and each secondary jet nozzle (830) passes through one of the at least one vanes (832);
wherein the at least one vane (832) is arranged to impart a swirl to the second fluid as it passes through the second fluid passage (810);
and
a plurality of third fluid passages (812) are configured to supply a third fluid, the plurality of third fluid passages (812) comprising an inner third fluid passage (812a) within the float swirler (814) and an outer third fluid passage (812b) defined within the float swirler (814) and radially outward from the inner third fluid passage (812a);
wherein the first fluid is a liquid fuel;
wherein the second fluid is a gaseous fuel; and
wherein the third fluid is air;
the assembly further comprising a liquid fuel tank for supplying the liquid fuel and a gaseous fuel tank for supplying the gaseous fuel.

2. The fuel injector nozzle assembly of claim 1, wherein each secondary jet nozzle (830) is fluidly coupled to the inner third fluid passage (812a).

3. The fuel injector nozzle assembly of claim 1 or 2, wherein each secondary jet nozzle (830) extends through the second fluid passage (810) such that the second fluid and the first fluid are fluidly separate.

4. The fuel injector nozzle assembly of any preceding claim, wherein the first fluid passage (808) is configured to receive a liquid fuel.

5. The fuel injector nozzle assembly of claim 4, wherein the liquid fuel comprises a mixture with water as a component of the liquid fuel.

6. The fuel injector nozzle assembly of any preceding claim, wherein the gaseous fuel comprises hydrogen.

7. The fuel injector nozzle assembly of any preceding claim, wherein the plurality of third fluid passages (812) are configured to receive air from a compressor.

8. The fuel injector nozzle assembly of claim 7, wherein the inner third fluid passage (812a) is configured to dispense a mixture of the third fluid and the first fluid and the outer third fluid passage (812b) is configured to dispense only the third fluid.

9. A turbine engine (20; 200) comprising:
a compressor section (24) and a combustor section (26; 300), wherein the combustor section (26; 300) comprises the fuel injector nozzle assembly (800) of any of claims 1 to 7.

10. The turbine engine (20; 200) of claim 9, wherein the plurality of third fluid passages (812a) are configured to receive air from the compressor section (24) and wherein the inner third fluid passage (812a) is configured to dispense a mixture of the third fluid and the first fluid and the outer third fluid passage (812b) is configured to dispense only the third fluid.

## Patentansprüche

1. Kraftstoffeinspritzdüsenbaugruppe (800) für ein Turbinentriebwerk (20; 200), umfassend:
einen Mittelkörper (818), der mindestens einen Strahldurchgang (824, 826) mit einer an einem Ende des Mittelkörpers (818) angeordneten Strahldüse (828) definiert, wobei der Mittelkörper (818) eine Düsenachse (F) definiert;
wobei der mindestens eine Strahldurchgang einen primären Strahldurchgang (824), der fluidisch mit der Strahldüse (828) gekoppelt ist, und einen sekundären oder mehrere sekundäre Strahldurchgänge (826) umfasst;
wobei jeder des einen oder der mehreren sekundären Strahldurchgänge (826) fluidisch mit einer jeweiligen sekundären Strahldüse (830) gekoppelt ist;
einen Zwischengehäusekörper (820), der radial außerhalb des Mittelkörpers (818) angeordnet ist;
einen Außengehäusekörper (822), der radial außerhalb des Zwischengehäusekörpers (820) angeordnet ist; und
einen Schwimmdrallerzeuger (814), der radial außerhalb des Außengehäusekörpers (822) angeordnet ist;
wobei:
der Mittelkörper (818) eine Vollkörperstruktur ist, derart, dass kein Luftstrom durch den Mittelkörper durchgeleitet wird;
ein erster Fluiddurchgang (808) ausgelegt ist, um ein erstes Fluid in den mindestens einen Strahldurchgang (824, 826) zuzuführen;
ein zweiter Fluiddurchgang (810), der teilweise zwischen dem Zwischengehäusekörper (820) und dem Außengehäusekörper (822) definiert ist, ausgelegt ist, um ein zweites Fluid zuzuführen;
wobei der zweite Fluiddurchgang (810) mindestens eine Schaufel (832), die sich zwischen dem Zwischengehäusekörper (820) und dem Außengehäusekörper (822) erstreckt, umfasst und jede sekundäre Strahldüse (830) durch eine der mindestens einen Schaufeln (832) verläuft;
wobei die mindestens eine Schaufel (832) angeordnet ist, um das zweite Fluid, wenn es den zweiten Fluiddurchgang (810) durchläuft, mit einem Drall zu beaufschlagen;
und
eine Vielzahl von dritten Fluiddurchgängen (812) ausgelegt sind, um ein drittes Fluid zuzuführen, die Vielzahl von dritten Fluiddurchgängen (812) umfassend einen inneren dritten Fluiddurchgang (812a) innerhalb des Schwimmdrallerzeugers (814) und einen äußeren dritten Fluiddurchgang (812b), der innerhalb des Schwimmdrallerzeugers (814) und radial außerhalb des inneren dritten Fluiddurchgangs (812a) definiert ist;
wobei das erste Fluid ein flüssiger Kraftstoff ist;
wobei das zweite Fluid ein gasförmiger Kraftstoff ist; und
wobei das dritte Fluid Luft ist;
die Baugruppe ferner umfassend einen Tank für flüssigen Kraftstoff zum Zuführen des flüssigen Kraftstoffs und einen Tank für gasförmigen Kraftstoff zum Zuführen des gasförmigen Kraftstoffs.

2. Kraftstoffeinspritzdüsenbaugruppe nach Anspruch 1, wobei jede sekundäre Strahldüse (830) fluidisch mit dem inneren dritten Fluiddurchgang (812a) gekoppelt ist.

3. Kraftstoffeinspritzdüsenbaugruppe nach Anspruch 1 oder 2, wobei sich jede sekundäre Strahldüse (830) derart durch den zweiten Fluiddurchgang (810) erstreckt, dass das zweite Fluid und das erste Fluid fluidisch getrennt sind.

4. Kraftstoffeinspritzdüsenbaugruppe nach einem der vorhergehenden Ansprüche, wobei der erste Fluiddurchgang (808) ausgelegt ist, um einen flüssigen Kraftstoff aufzunehmen.

5. Kraftstoffeinspritzdüsenbaugruppe nach Anspruch 4, wobei der flüssige Kraftstoff ein Gemisch mit Wasser als einem Bestandteil des flüssigen Kraftstoffs umfasst.

6. Kraftstoffeinspritzdüsenbaugruppe nach einem der vorhergehenden Ansprüche, wobei der gasförmige Kraftstoff Wasserstoff umfasst.

7. Kraftstoffeinspritzdüsenbaugruppe nach einem der vorhergehenden Ansprüche, wobei die Vielzahl von dritten Fluiddurchgängen (812) ausgelegt sind, um Luft von einem Verdichter aufzunehmen.

8. Kraftstoffeinspritzdüsenbaugruppe nach Anspruch 7, wobei der innere dritte Fluiddurchgang (812a) ausgelegt ist, um ein Gemisch aus dem dritten Fluid und dem ersten Fluid abzugeben, und der äußere dritte Fluiddurchgang (812b) ausgelegt ist, um ausschließlich das dritte Fluid abzugeben.

9. Turbinentriebwerk (20; 200), umfassend:
einen Verdichterabschnitt (24) und einen Brennkammerabschnitt (26; 300), wobei der Brennkammerabschnitt (26; 300) die Kraftstoffeinspritzdüsenbaugruppe (800) nach einem der Ansprüche 1 bis 7 umfasst.

10. Turbinentriebwerk (20; 200) nach Anspruch 9, wobei die Vielzahl von dritten Fluiddurchgängen (812a) ausgelegt sind, um Luft aus dem Verdichterabschnitt (24) aufzunehmen, und wobei der innere dritte Fluiddurchgang (812a) ausgelegt ist, um ein Gemisch aus dem dritten Fluid und dem ersten Fluid abzugeben, und der äußere dritte Fluiddurchgang (812b) ausgelegt ist, um ausschließlich das dritte Fluid abzugeben.

## Revendications

1. Ensemble de buse d'injecteur de carburant (800) pour un moteur à turbine (20 ; 200) comprenant :
un corps central (818) définissant au moins un passage de jet (824, 826) avec une buse de jet (828) disposée à une extrémité du corps central (818), le corps central (818) définissant un axe de buse (F) ;
dans lequel le au moins un passage de jet comprend un passage de jet primaire (824) couplé fluidiquement à la buse de jet (828) et un ou plusieurs passages de jet secondaires (826) ;
dans lequel chacun du un ou de plusieurs passages de jet secondaire (826) est couplé fluidiquement à une buse de jet secondaire respective (830) ;
un corps de logement intermédiaire (820) disposé radialement vers l'extérieur à partir du corps central (818) ;
un corps de boîtier extérieur (822) disposé radialement vers l'extérieur à partir du corps de boîtier intermédiaire (820) ; et
un tourbillonneur à flotteur (814) disposé radialement vers l'extérieur du corps de boîtier extérieur (822) ;
dans lequel :
le corps central (818) est une structure de corps solide de sorte qu'aucun flux d'air ne passe à travers le corps central ;
un premier passage de fluide (808) est configuré pour fournir un premier fluide dans le au moins un passage de jet (824, 826) ;
un deuxième passage de fluide (810) partiellement défini entre le corps de boîtier intermédiaire (820) et le corps de boîtier extérieur (822) est configuré pour fournir un deuxième fluide ;
dans lequel le deuxième passage de fluide (810) comprend au moins une ailette (832) s'étendant entre le corps de boîtier intermédiaire (820) et le corps de boîtier extérieur (822) et chaque buse de jet secondaire (830) passe à travers une de la au moins une ailette (832) ;
dans lequel la au moins une ailette (832) est disposée pour imprimer un tourbillon au deuxième fluide lorsqu'il passe à travers le deuxième passage de fluide (810) ;
et
une pluralité de troisièmes passages de fluide (812) est configuré pour fournir un troisième fluide, la pluralité de troisièmes passages de fluide (812) comprenant un troisième passage de fluide intérieur (812a) à l'intérieur du tourbillonneur à flotteur (814) et un troisième passage de fluide extérieur (812b) défini à l'intérieur du tourbillonneur à flotteur (814) et radialement vers l'extérieur à partir du troisième passage de fluide intérieur (812a) ;
dans lequel le premier fluide est un carburant liquide ;
dans lequel le deuxième fluide est un carburant gazeux ; et
dans lequel le troisième fluide est l'air ;
l'ensemble comprend en outre un réservoir de carburant liquide pour l'alimentation en carburant liquide et un réservoir de carburant gazeux pour l'alimentation en carburant gazeux.

2. Ensemble de buse d'injecteur de carburant selon la revendication 1, dans lequel chaque buse de jet secondaire (830) est couplée fluidiquement au troisième passage de fluide intérieur (812a).

3. Ensemble de buse d'injecteur de carburant selon la revendication 1 ou 2, dans lequel chaque buse de jet secondaire (830) s'étend à travers le deuxième passage de fluide (810) de sorte que le deuxième fluide et le premier fluide soient séparés fluidiquement.

4. Ensemble de buse d'injecteur de carburant selon une quelconque revendication précédente, dans lequel le premier passage de fluide (808) est configuré pour recevoir un carburant liquide.

5. Ensemble de buse d'injecteur de carburant selon la revendication 4, dans lequel le carburant liquide comprend un mélange avec de l'eau comme composant du carburant liquide.

6. Ensemble buse d'injecteur de carburant selon une quelconque revendication précédente, dans lequel le carburant gazeux comprend de l'hydrogène.

7. Ensemble de buse d'injecteur de carburant selon une quelconque revendication précédente, dans lequel la pluralité de troisièmes passages de fluide (812) est configurée pour recevoir de l'air d'un compresseur.

8. Ensemble de buse d'injecteur de carburant selon la revendication 7, dans lequel le troisième passage de fluide intérieur (812a) est configuré pour distribuer un mélange du troisième fluide et du premier fluide et le troisième passage de fluide extérieur (812b) est configuré pour distribuer uniquement le troisième fluide.

9. Moteur à turbine (20 ; 200) comprenant :
une section de compresseur (24) et une section de chambre de combustion (26 ; 300), dans lequel la section de chambre de combustion (26 ; 300) comprend l'ensemble de buse d'injecteur de carburant (800) selon l'une quelconque des revendications 1 à 7.

10. Moteur à turbine (20 ; 200) selon la revendication 9, dans lequel la pluralité de troisièmes passages de fluide (812a) est configurée pour recevoir de l'air de la section de compresseur (24) et dans lequel le troisième passage de fluide intérieur (812a) est configuré pour distribuer un mélange du troisième fluide et du premier fluide et le troisième passage de fluide extérieur (812b) est configuré pour distribuer uniquement le troisième fluide.
